# EUROPEAN PATENT SPECIFICATION

(11) **EP 1 004 120 B1**
(45) Date of publication and mention of the grant of the patent: **21.02.2007**
(21) Application number: 98937779.1
(22) Date of filing: 05.08.1998
(51) Int. Cl.: G21C 1/30

(54) **METHOD AND DEVICE FOR PRODUCING NEUTRONS, IN PARTICULAR FOR A SUBCRITICAL NUCLEAR REACTOR**
VERFAHREN UND VORRRICHTUNG ZUR ERZEUGUNG VON NEUTRONEN, INSBESONDERE FÜR EINEN SUBKRITISCHEN KERNREAKTOR
PROCEDE ET DISPOSITIF DE PRODUCTION DE NEUTRONS, EN PARTICULIER POUR UN REACTEUR NUCLEAIRE SOUS-CRITIQUE

(30) Priority: 05.08.1997 IT TO970715
(43) Date of publication of application: 31.05.2000
(73) Proprietor: Ansaldo Nucleare S.p.A., 16152 Genova (IT)
(72) Inventor: CINOTTI, Luciano, I-16036 Recco (IT)
(74) Representative: Jorio, Paolo
(86) International application number: PCT/IT1998/000228
(87) International publication number: WO 1999/008286

(56) References cited:
- WO-A-95/12203
- US-A- 3 349 001
- US-A- 5 768 329

## Description

### TECHNICAL FIELD

The present invention relates to a method and device, particularly for subcritical nuclear reactors, for producing neutrons by interaction of a beam of high-energy particles with a current of heavy-nucleus fluid.

### BACKGROUND ART

As is known, in "subcritical" nuclear reactors, the mass of fuel in the core is less than the so-called "critical" mass required to maintain a self-supporting nuclear fission reaction, which is maintained by an auxiliary device producing the neutrons required by the system, so that external neutron supply need simply be cut off to arrest the reaction and so "turn off" the reactor, with obvious advantages in terms of safety.

In particular, the neutrons required by the reaction system are known to be produced by interaction of a beam of high-energy particles (typically protons) with heavy nuclei in the system itself, e.g. in the core of the reactor, so that the neutrons produced are multiplied in subcritical conditions by the fission process in the core.

International Patent Application PCT/EP94/02467, for example, describes a reactor wherein a beam of high-energy particles, produced by an accelerator, is fed into the core along a conduit in which a vacuum is substantially maintained, and which is closed at the bottom end by a hemispherical bottom wall or so-called "window". The bottom end of the conduit housed inside the core is immersed in a fluid comprising heavy-nucleus material (liquid metals or molten metal salts) and which, in particular, is the coolant of the reactor itself. At the end of the conduit, the high-energy particles travel through, and yield part of their energy to, the bottom wall, and so interact with the heavy-nucleus fluid to initiate neutron production. A major drawback of this system - known as the "proton window" system, by a proton beam being fed through the bottom wall of the conduit - is the severe stress to which the bottom wall is subjected. That is, besides being damaged by the high-energy particles traveling though it, the bottom wall of the conduit is also subjected to severe temperature gradients - severe internal heating by the particles, and external cooling by the heavy-nucleus fluid - alongside an already high operating temperature. Moreover, on account of the vacuum in the conduit, the external pressure of the heavy-nucleus fluid on the bottom wall is not balanced by the pressure inside the conduit.

One solution to the drawbacks of the above method would be to generate the neutrons inside the conduit itself by the high-energy particle beam interacting with a confined portion of the heavy-nucleus fluid at the bottom of the conduit, so that the bottom wall of the conduit - while still operating in severe conditions - is damaged to a lesser degree by only being traversed by neutrons ("neutron window"). This, however, would give rise to the further problem of drawing off the power accumulated in the confined portion of fluid following interaction with the high-energy particle beam. Moreover, interaction of the high-energy particles and the heavy-nucleus fluid would result in radioactive products being formed inside the conduit and possibly diffusing outside the reactor.

A device according to the preamble of enclosed claim 1 is disclosed by US-A-3.349.001.

### DISCLOSURE OF INVENTION

It is an object of the present invention to provide a method and device for producing neutrons, designed to eliminate the aforementioned drawbacks typically associated with known neutron production systems.

According to the present invention, there is provided a device, in particular for a subcritical nuclear reactor, for producing neutrons by interaction of a beam of high-energy particles with a first operating fluid comprising a heavy-nucleus material, as, claimed in Claim 1.

The present invention also relates to a method of producing neutrons by interaction of a beam of high-energy particles with a first operating fluid comprising a heavy-nucleus material, as claimed in claim 17.

In a preferred embodiment, the heavy-nucleus first operating fluid is kept circulating along a hydraulic path at least partially outside said main supply conduit.

In one variation, however, the heavy-nucleus first operating fluid is kept circulating along a hydraulic path defined entirely inside said main supply conduit and in no way communicating hydraulically with the outside of the main supply conduit.

According to the method and device the beam of high-energy particles does not travel through metal walls immersed in the heavy-nucleus fluid (and therefore subjected to severe thermal and mechanical stress) thus eliminating the drawbacks of known "proton window" solutions : in particular, the severe operating conditions to which such walls are subjected, and which currently available materials are incapable of withstanding. According to the invention, on the other hand, the beam of high-energy particles only travels through the partition defining the portion of the supply conduit containing the pressurized gas, which partition is not immersed in the heavy-nucleus fluid and may be provided with a cooling circuit to achieve withstandable operating conditions. The beam then travels through the liquid-gas interface between the heavy-nucleus fluid and the pressurized gas in the supply conduit to impinge on a portion of heavy-nucleus fluid maintained in motion to prevent local overheating.

The heavy-nucleus fluid may comprise a portion of the coolant of the reactor itself, in which case, it is circulated by the same means circulating the reactor coolant, possibly integrated with further circulating means (e.g. entraining-gas circulating means, using the same gas pressurizing the supply conduit).

Conversely, the heavy-nucleus fluid may be separate from the reactor coolant. In this case, too, in which the heavy-nucleus fluid is confined within the supply conduit, the present invention provides for effectively drawing off the power accumulated in the confined fluid portion following interaction with the high-energy particle beam.

Finally, the partition in the supply conduit prevents radioactive products from dispersing along the conduit.

### BRIEF DESCRIPTION OF DRAWINGS

A number of non-limiting embodiments of the present invention will be described by way of example with reference to the accompanying drawings, in which:
Figure 1 shows a schematic longitudinal section of a nuclear reactor featuring a device for producing neutrons in accordance with the present invention;
Figure 2 shows a schematic longitudinal section of a detail of a variation of the Figure 1 device;
Figure 3 shows a schematic longitudinal section of a detail of a further variation of the Figure 1 device.

### BEST MODE FOR CARRYING OUT THE INVENTION

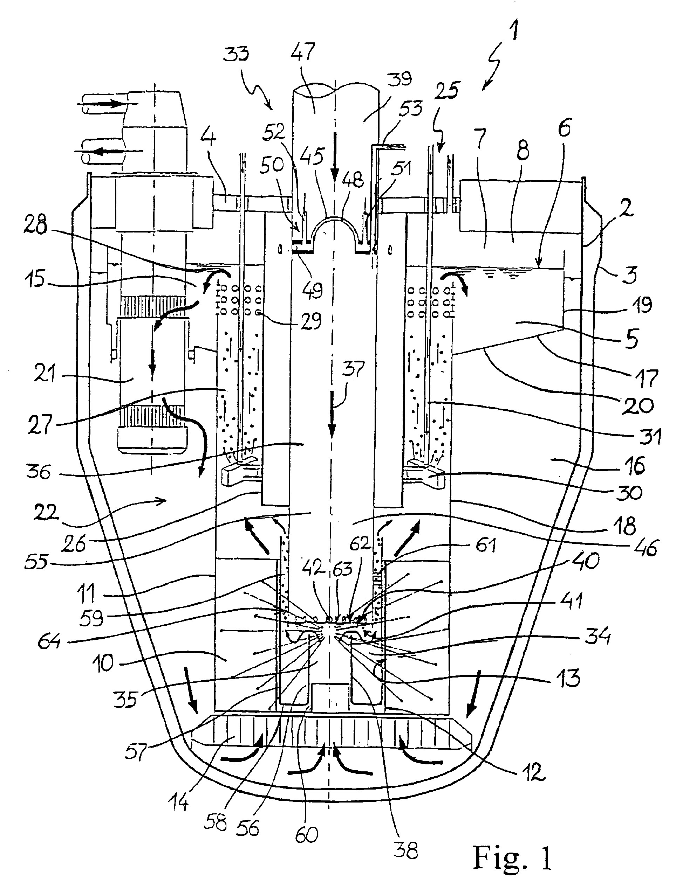

Number 1 in Figure 1 indicates as a whole a natural-circulation nuclear reactor employing a liquid metal, e.g. lead, as the coolant.

Reactor 1 comprises, in known manner, an inner enclosure 2 and an outer enclosure 3, both substantially cylindrical and closed at the top by a cover 4. Enclosure 2 contains a predetermined quantity of a coolant 5 - in the example shown, a liquid metal (e.g. lead) - up to a free surface 6; and a predetermined quantity of an inert gas 7 contained in a vessel 8 located above free surface 6 of liquid metal 5 and beneath cover 4.

The bottom of enclosure 2 houses the so-called core 10 containing, as is known, the nuclear fuel. Core 10 has a substantially annular structure, is defined externally by a container 11, and is defined internally by an inner ring 12 of fuel elements (not shown in detail) internally coaxial with container 11 and defining a substantially cylindrical seat 13 inside core 10. Further fuel elements are arranged in a number of concentric rings (not shown) between inner ring 12 and container 11; and core 10 is supported at the bottom on a known grille 14 for conveying coolant 5 inside core 10.

According to a known construction solution particularly suitable for liquid-metal reactors, reactor 1 houses a top and bottom manifold 15 and 16 separated by a known structure 17 comprising a first cylindrical portion 18 coaxial with enclosure 2 and defining an extension of container 11 of core 10, and a second cylindrical portion 19 also coaxial with enclosure 2 and which is radially outwards of and connected to portion 18 by a substantially truncated-cone-shaped connecting portion 20. Reactor 1 also comprises at least one known heat exchanger 21 located at structure 17 between manifolds 15 and 16, and which provides for extracting heat from coolant 5. In actual use, the top ("hot") manifold 15 feeds hot liquid metal to exchanger 21, while the bottom ("cold") manifold 16 feeds cold liquid metal from exchanger 21 to core 10, thus defining a cooling circuit 22.

According to a known solution described in Italian Patent Application n. TO96A001081 filed by the present Applicant, reactor 1 preferably, though not necessarily, also comprises an auxiliary circulating device 25 for assisting natural circulation of coolant 5 in reactor 1.

For this purpose, bottom cylindrical portion 18 of structure 17 extends beyond connecting portion 20 up to a given distance beneath free surface 6 of coolant 5; a cylindrical element 26 of given diameter is housed coaxially inside bottom cylindrical portion 18, at a given distance from core 10, and extends vertically above free surface 6 of coolant 5, where it is secured to cover 4; and cylindrical element 26 and cylindrical portion 18 define an annular conduit 27 inside hot manifold 15 and communicating hydraulically with hot manifold 15 via an annular passage 28 defined by the given distance between cylindrical portion 18 and free surface 6 of coolant 5, and by a number of holes 29 formed through the lateral wall of cylindrical portion 18.

Annular conduit 27 houses a number of diffusers 30, which are fed by respective connecting conduits 31 and blowers (not shown) with compressed gas drawn, for example, from the cover gas 7 of reactor 1 in vessel 8, and which, as illustrated in Italian Patent Application n. TO96A001081, assists natural circulation of coolant 5 inside reactor 1 by lightening the column of hot liquid metal from core 10.

Reactor 1 operates in subcritical conditions - that is, the amount of nuclear fuel in core 10 is less than that required to maintain self-supporting fission of the fuel - and therefore comprises a device 33 for producing the neutrons required to sustain the reaction.

According to the present invention, neutron producing device 33 comprises containing means 34 for containing an operating fluid 35 comprising heavy-nucleus material (and hereinafter referred to simply as "heavy-nucleus fluid"); and a main supply conduit 36 by which a controlled beam of high-energy particles (e.g. protons) - indicated by arrow 37 in Figure 1 - is directed against heavy-nucleus fluid 35 to generate, in known manner, a predetermined number of neutrons by interaction of beam 37 with heavy-nucleus fluid 35.

In the Figure 1 example, heavy-nucleus fluid 35 is defined by the liquid-metal coolant 5 of reactor 1, and more specifically by a portion of liquid metal 5 contained inside cylindrical seat 13 of core 10, and which, as explained later on, is fed continuously into seat 13 by a feed structure 38.

Main supply conduit 36 is located between core 10 of reactor 1 and a device, outside reactor 1, for generating particle beam 37 and defined, for example, by a known accelerator (not shown). Conduit 36 may be of any shape, but comprises at least one end portion 39 - substantially straight in the non-limiting example shown in Figure 1 - internally coaxial with enclosure 2 of reactor 1, as shown in Figure 1. In the example shown, main supply conduit 36 is inserted through an opening in cover 4, is housed coaxially inside cylindrical element 26, and extends vertically downwards so that its own bottom end 40 is housed inside cylindrical seat 13 of annular core 10. End 40 of conduit 36 is open at the bottom, and comprises a number of radial through holes 42 at a given distance from its own bottom edge 41.

Inside, main supply conduit 36 comprises a partition 45 extending across straight portion 39 of conduit 36 and preferably located over free surface 6 of coolant 5 in reactor 1. Partition 45 defines a first portion 46 of main supply conduit 36, extending between partition 45 and bottom end 40 of main supply conduit 36; and a second portion 47 extending between the particle accelerator (not shown) and the partition.

According to a preferred embodiment, partition 45 is defined by a metal disk having a substantially hemispherical central portion 48 with the concavity facing first portion 46, and by an annular peripheral edge 49 secured in fluidtight manner to the inner lateral wall of conduit 36, and also comprises a cooling circuit 50, e.g. of bubbling water: partition 45 is preferably defined by two or more relatively thin sheets of material highly transparent to high-energy particles (e.g. aluminium), and cooling water circulates inside narrow gaps between the sheets (not shown). In which case, cooling water inlet and outlet conduits 51 and 52 are provided on peripheral edge 49 of partition 45, and peripheral edge 49 is also fitted through with at least one secondary supply conduit 53 for feeding gas into first portion 46 of main conduit 36. According to the invention, first portion 46 therefore contains a gas 55 at a predetermined pressure and supplied by conduit 53, while a vacuum is substantially maintained in second portion 47 of main supply conduit 36. Gas 55 is preferably, though not necessarily, drawn - e.g. by means of known blowers (not shown) - from the cover gas 7 of reactor 1 in vessel 8.

Structure 38 feeding liquid metal 5 and forming part of device 33 is housed inside cylindrical seat 13 of core 10, and comprises two substantially cylindrical conduits 56, 57 coaxial with each other and with main supply conduit 36, and connected to each other at the bottom by an annular bottom wall 58. Conduit 56 is smaller in diameter than main supply conduit 36, and is located a given distance beneath the bottom edge 41 of main supply conduit 36, whereas conduit 57 is larger in diameter than main supply conduit 36, and extends vertically upwards from bottom wall 58 and beyond edge 41 to surround, at a given radial distance, a portion of first portion 46 of main supply conduit 36, and so define with said portion an annular conduit 59. Conduit 56 is preferably located beneath bottom edge 41 of main supply conduit 36 at a distance, from radial holes 42, equal to about a quarter of the diameter of conduit 56.

Feed structure 38 is housed inside cylindrical seat 13 of annular core 10, so that conduit 57 substantially mates with inner ring 12 of the core and preferably projects a given distance beyond the top of core 10. At the bottom, feed structure 38 is secured to supporting grille 14 of core 10 by means of a hollow cylindrical element 60, which is housed coaxially inside seat 13, projects vertically from the upper face of grille 14, and is interference-fitted, for example, with conduit 56. Feed structure 38 is also secured to main supply conduit 36 by means of anchoring elements 61.

According to the invention, the pressure of gas 55 in first portion 46 of main supply conduit 36 is sufficient to create, at bottom end 40 of main supply conduit 36, a free surface 62 of liquid metal 5, which therefore defines an interface 63 between the pressurized gas 55 in portion 46 of conduit 36, and the portion of liquid metal 5 defining heavy-nucleus fluid 35 and contained in cylindrical seat 13 of annular core 10. The pressure at which gas 55 is maintained is therefore that which balances the pressure of cover gas 7 of reactor 1, plus the head of liquid metal 5 between free surfaces 6 and 62. According to the invention, the pressure of gas 55 must also be such as expel gas 55 from radial holes 42 and upwards along annular conduit 59 to lighten the column of liquid metal 5 in conduit 59, and so define, together with feed structure 38, further circulating means 64 for circulating liquid metal 5 and which, together with auxiliary circulating device 25, assist the overall circulation of liquid metal 5 in reactor 1.

In actual use, a given amount of gas - e.g. drawn from cover gas 7 of reactor 1 in vessel 8 - is compressed by means of known blowers (not shown) and fed along secondary supply conduit 53 into first portion 46 of main supply conduit 36; and the pressure of the gas fed into portion 46 is such as to maintain free surface 62 of liquid metal 5 on a level with radial holes 42 through which the pressurized gas in portion 46 is expelled and fed upwards along annular conduit 59.

Liquid metal 5 circulates inside reactor 1 along the cooling circuit 22 defined between core 10 - from which liquid metal 5 extracts the heat generated by the nuclear reaction in the core - and heat exchanger 21 - to which liquid metal 5 yields the heat extracted from the core. The hot liquid metal 5 from core 10 flows towards the top of the reactor along annular conduit 27 into which gas is also fed by diffusers 30 to accelerate the upward flow of liquid metal 5 and so improve overall circulation of liquid metal 5 in reactor 1 (as described in detail in Italian Patent Application n. T096A001081). The cold liquid metal 5 from exchanger 21, on the other hand, flows down inside bottom manifold 16 to the bottom of reactor 1, from where it is fed back to core 10 through grille 14.

More specifically, according to the present invention, part of the cold liquid metal 5 from the bottom of reactor 1 flows through core 10 (more specifically, the portion of the core containing the nuclear fuel), and part flows upwards into inner seat 13 of the core through hollow cylindrical element 60 and conduit 56 of feed structure 38. On reaching the top of conduit 56, liquid metal 5 is bombarded by high-energy particle beam 37 traveling along main supply conduit 36, and the interaction of particle beam 37 and the heavy nuclei of liquid metal 5 generates a predetermined number of neutrons, which, as shown schematically in Figure 1, in turn bombard the nuclear fuel in core 10 to feed the nuclear reaction.

The liquid metal 5 heated by particle beam 37 is fed by feed structure 38 to annular conduit 59. More specifically, the geometry of feed structure 38 is such as to produce a spurting motion of liquid metal 5: radially outwards, then axially downwards, again radially outwards, and finally axially upwards, along a horizontal S-shaped path as shown by the arrows in Figure 1. On reaching annular conduit 59, liquid metal 5 encounters and is drawn upwards by the upward-moving gas from holes 42; and, at the outlet of annular conduit 59, liquid metal 5 mixes with the liquid metal from core 10 and is once more fed to heat exchanger 21 as described previously.

As such, the metal structures immersed in the heavy-nucleus fluid are subjected solely to neutron radiation, as opposed to high-energy particles. Beam 37, in fact, interacts with and releases neutrons from heavy-nucleus fluid 35 close to interface 63 between heavy-nucleus fluid 35 and the pressurized gas 55 in main supply conduit 36.

The only element through which high-energy particle beam 37 travels is partition 45, which, however, is not in direct contact with liquid metal 5, is subjected to acceptable stress, and moreover is provided with cooling means.

Moreover, high-energy particle beam 37 impinges on a heavy-nucleus fluid in which a spurting motion is maintained, as opposed to a stagnant fluid, thus preventing local overheating, boiling, alteration of the free surface level, and excessive thermal stress. In the example described, heavy-nucleus fluid 35 is circulated by the same means 25 circulating coolant 5 of reactor 1, and is further assisted by gas 55 issuing through radial holes 42.

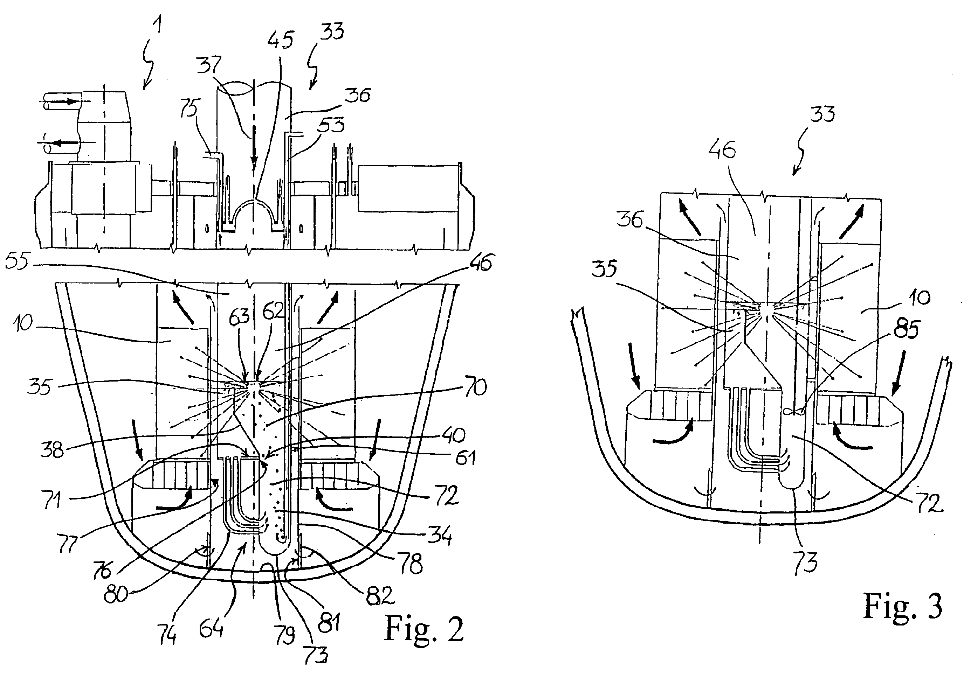

In the Figure 2 variation, in which any details similar or identical to those already described are indicated using the same numbering system, particle beam 37 impinges on a confined portion of heavy-nucleus fluid 35, which portion is contained entirely inside a closed-bottom end portion 70 of first portion 46 of main supply conduit 36, and is housed inside inner cylindrical seat 13 of annular core 10, so that, unlike the Figure 1 embodiment, the bottom end 40 of main supply conduit 36 is closed by a bottom wall 71, and heavy-nucleus fluid 35 - which may be the same type of fluid as coolant 5 - is separated from coolant 5 and contained entirely inside end portion 70 of conduit 36.

In the non-limiting example shown in Figure 2, end portion 70 comprises an eccentric appendix 72, which has a smaller flow passage than portion 46, extends vertically downwards from bottom wall 71, and also has a closed bottom end 73; and end portion 70 also comprises a number of conduits 74 hydraulically connecting bottom end 40 of portion 46 and bottom end 73 of appendix 72, i.e. of main supply conduit 36.

As before, portion 46 of main supply conduit 36 contains a pressurized gas 55 supplied by a secondary supply conduit 53 extending through peripheral edge 49 of partition 45. In this case, however, secondary supply conduit 53 extends along the whole of portion 46 and eccentric appendix 72, so that gas 55 is supplied at closed bottom end 73 of main supply conduit 36, or at any rate at a level relatively lower than that of free surface 62. Peripheral edge 49 of partition 45 is also fitted through with an outlet conduit 75 for gas 55.

The supply pressure of gas 55 is such as to enable the gas to flow out of secondary supply conduit 53, despite the presence of heavy-nucleus fluid 35, and up through the heavy-nucleus fluid inside portion 46. In this case, too, gas 55 defines, inside portion 46 and at a predetermined level from bottom wall 71, a free surface 62 of heavy-nucleus fluid 35, which defines an interface 63 between heavy-nucleus fluid 35 and the pressurized gas 55 in portion 46. In this variation, however, the supply pressure of gas 55 may be relatively low, since heavy-nucleus fluid 35 is completely separate from coolant (liquid metal) 5, and the only head to balance is that between free surface 62 and the outlet of secondary supply conduit 53.

End portion 70 also houses a feed structure 38, which, from an inner edge 76 connecting appendix 72 to bottom wall 71, projects obliquely upwards to a given distance beneath free surface 62, so as to define, inside end portion 70, an upper extension of appendix 72 having an upwardly increasing flow passage. Together with appendix 72 and connecting conduits 74, feed structure 38 therefore defines, for heavy-nucleus fluid 35, a closed-circuit hydraulic path entirely inside main supply conduit 36 and in no way communicating hydraulically with cooling circuit 22 of reactor 1, in which, as stated, coolant 5 is circulated.

The heavy-nucleus fluid 35 bombarded by high-energy particle beam 37 is thus confined in closed-bottom appendix 72 and in end portion 70 of main supply supply conduit 36 extending between interface 63 and bottom wall 71.

In the preferred embodiment shown in Figure 2, end portion 70 of main supply conduit 36 is housed entirely inside cylindrical seat 13 of annular core 10, whereas appendix 72 extends downwards beneath grille 14 supporting core 10, i.e. up to a point close to the bottom 79 of reactor 1; and grille 14 has a central through opening 77 through which hydraulic connecting conduits 74 and appendix 72 are inserted. In this variation, reactor 1 preferably also comprises a feed element 78 forming part of cooling circuit 22 of coolant 5, and which is defined by a cylindrical vertical conduit inserted inside seat 13 of core 10, substantially mates with inner ring 12 of core 10, extends upwards to project a given distance beyond core 10, extends downwards beyond grille 14 and up to a given distance from bottom 79 of reactor 1, so as to define an annular passage 81 between its own bottom end 80 and bottom 79, and is secured to bottom 79 of reactor 1 and to main supply conduit 36 by guide elements 82 and anchoring elements 61 respectively.

In actual use, high-energy particle beam 37 travels along main supply conduit 36 and through interface 63 to bombard and heat heavy-nucleus fluid 35 and generate neutrons, which, as shown schematically in Figure 2, in turn bombard the nuclear fuel in core 10 to feed the nuclear reaction.

In this case, too, a spurting motion of heavy-nucleus fluid 35 is maintained at interface 63, and the entraining gas fed to bottom end 73 of appendix 72 keeps the heavy-nucleus fluid circulating inside the closed circuit defined by feed structure 38, appendix 72 and hydraulic connecting conduits 74.

The heat generated by the interaction of particle beam 37 and heavy-nucleus fluid 35 is removed by circulating the fluid itself, which is cooled as it travels along end portion 70 of main supply conduit 36, connecting conduits 74 and appendix 72, on the outside of which circulates relatively cold liquid metal 5 from the bottom of reactor 1, in particular through annular passage 81.

In this variation, too, the metal structures immersed in the heavy-nucleus fluid are subjected solely to neutron radiation, as opposed to high-energy particles. Beam 37, in fact, interacts with and releases neutrons from heavy-nucleus fluid 35 close to the gas-liquid interface 63 between the pressurized gas 55 in main supply conduit 36 and the heavy-nucleus fluid 35 in end portion 70 of main supply conduit 36.

This variation therefore employs a heavy-nucleus fluid 35 separate from coolant 5 of reactor 1 (even though both may be of the same type); and, even though the heavy-nucleus fluid 35 is confined inside supply conduit 36, the present invention nevertheless provides for removing a considerable amount of heat generated in heavy-nucleus fluid 35 by interaction with high-energy particle beam 37, by keeping heavy-nucleus fluid 35 circulating, as described, along the low-load-loss closed circuit cooled externally by coolant 5.

In the further variation shown in Figure 3, in which any details similar or identical to those already described are indicated using the same numbering system, heavy-nucleus fluid 35 is circulated in the secondary circuit by at least one pump 85, which is immersed in heavy-nucleus fluid 35, is preferably housed in appendix 72, at a given distance from closed bottom end 73, and is activated, for example, by a motor (not shown) outside reactor 1. According to the present invention, pump 85 is only called upon to overcome the load losses of the secondary circuit, and therefore need not be particularly powerful. In this case, since portion 46 of main supply conduit 36 need not be pressurized, partition 45 acts solely as a barrier for the radioactive products generated by the interaction of particle beam 37 and heavy-nucleus fluid 35, and may be eliminated without impairing the neutron-generating efficiency of device 33.

Clearly, changes may be made to the device as described and illustrated herein without, however, departing from the scope of the accompanying Claims.

## Claims

1. A device (33), in particular for a subcritical nuclear reactor, for producing neutrons by interaction of a beam (37) of high-energy particles with a first operating fluid (35) comprising a heavy-nucleus material, the device comprising:
- a main supply conduit (36) whereby said beam (37) of high-energy particles is directed onto said first operating fluid (35) along a predetermined direction;
- containing means (34) for containing said first operating fluid (35) and located at a first end (40) of said main supply conduit (36);
- an interface (63) defined by a free surface (62) of said first operating fluid (35) located at said first end (40) of the main supply conduit (36) and separating a portion (46) of said main supply conduit (36) and said first operating fluid (35);
- circulating means (64) for circulating said first operating fluid (35) and keeping said first operating fluid (35) moving at said free surface (62) during said interaction with said beam (37) of high-energy particles;
- heat-exchange means (21, 22) for extracting heat from the moving said first operating fluid (35);
the device being **characterized in that**:
- said circulating means (64) conduct said heavy-nucleus first operating fluid (35) toward said free surface (62) in an opposite direction of said beam (37);
- a feed structure (38) is positioned beneath said free surface (62) and at a given distance from said free surface (62), and the geometry of said feed structure (38) is such as to produce a spurting motion of said first operating fluid (35) just beneath said free surface (62), in which said first operating fluid (35), conducted towards said free surface (62) in an opposite direction of said beam (37) by said circulating means (64), is radially diverted before being moved away from said free surface (62).

2. A device as claimed in Claim 1, **characterized in that** said main supply conduit (36) comprises, at said first end (40), at least a first portion (46) containing a gas (55) at a predetermined pressure; said free surface (62) separating the pressurized gas (55) in said first portion (46) and the first operating fluid (35) in said containing means (34), and being maintained by the pressurized gas (55) at a predetermined level with respect to said first end (40) of the main supply conduit (36).

3. A device as claimed in Claim 2, **characterized in that** said heat-exchange means (22) for extracting heat from the moving heavy-nucleus first operating fluid (35) comprises a first cooling circuit (22) in which circulates a cooling second operating fluid (5).

4. A device as claimed in Claim 3, **characterized in that** the moving heavy-nucleus first operating fluid (35) is defined by a portion of the cooling second operating fluid (5) drawn continuously from said cooling circuit (22); said feed structure (38) for conducting said first operating fluid (35) defining, for said first operating fluid (35), a path at least partly in common with said cooling circuit (22) of said second operating fluid (5).

5. A device as claimed in Claim 4, **characterized by** also comprising a secondary supply conduit (53) for feeding said gas (55) into said first portion (46) of said main supply conduit (36); said main supply conduit (36) having at least one substantially vertical, substantially cylindrical, straight end portion (39) of which said first end (40) of the main supply conduit (36) defines an open bottom end having, at a predetermined distance from its own bottom end (41), a number of through radial holes (42); the pressure of said gas (55) in said first portion (46) of said main supply conduit (36) being such as to maintain said free surface (62) substantially on a level with said radial holes (42).

6. A device as claimed in Claim 5, **characterized in that** said feed structure (38) comprise a first (56) and a second (57) conduit, both substantially cylindrical and coaxial with said end portion (39) of said main supply conduit (36), and connected at respective bottom ends by an annular bottom wall (58); said first conduit (56) being smaller in diameter than said main supply conduit (36) and being located beneath and at a predetermined distance from said first end (40) of the main supply conduit and beneath said free surface (62) of said first operating fluid (35); said second conduit (57) being larger in diameter than said main supply conduit (36), and extending vertically upwards from said bottom wall (58) and beyond said first end (40) of said main supply conduit (36), so as to surround, at a predetermined radial distance, at least a portion of said main supply conduit (36) and define, together with the main supply conduit, an annular conduit (59).

7. A device as claimed in Claim 6, **characterized in that** said first conduit (56) is located beneath said free surface (62) of said first operating fluid (35) defined at said number of through radial holes (42), at a distance from said free surface (62) equal to about a quarter of the diameter of said first conduit (56).

8. A device as claimed in Claim 3, **characterized in that** the heavy-nucleus first operating fluid (35) is contained entirely inside an end portion of said first portion (46) of said main supply conduit (36) extending between said free surface (62) and said first end (40) of the main supply conduit (36); said feed structure (38) defining a closed circuit for circulating the first operating fluid and in no way communicating hydraulically with said cooling circuit (22) of the cooling second operating fluid (5).

9. A device as claimed in Claim 8, **characterized in that** said main supply conduit (36) has at least one substantially vertical, substantially cylindrical, straight end portion (39) of which said first end (40) defines a bottom end closed by a bottom wail (71); said main supply conduit (36) comprising an eccentric appendix (72) having a closed bottom end (73), having a flow passage smaller than that of said main supply conduit (36), and extending vertically downwards from said bottom wall (71), and a number of hydraulic connecting conduits (74) for hydraulically connecting said bottom end (40) of said main supply conduit (36) to said closed bottom end (73) of said appendix (72).

10. A device as claimed in Claim 9, **characterized in that** said feed structure (38) projects obliquely upwards, from an inner edge (76) connecting said appendix (72) to said bottom wall (71), up to a predetermined distance beneath said free surface (62), so as to define, inside said end portion (70) of the main supply conduit (36), an upper extension of said appendix (72) having a flow passage increasing upwards.

11. A device as claimed in Claim 10, **characterized in that** said appendix (72) and said hydraulic connecting conduits (74) are immersed in the cooling second operating fluid (5) circulating in said cooling circuit (22).

12. A device as claimed in Claim 11, **characterized by** also comprising a secondary supply conduit (53) extending along said end portion (70) of said main supply conduit (36) and along said eccentric appendix (72) to feed an entraining gas into the heavy-nucleus first operating fluid (35) dose to said closed bottom end (73) of said appendix (72) .

13. A device as claimed in Claim 11 or 12, **characterized in that** said circulating means comprise forced circulating means (85) at least partly immersed in the heavy-nucleus first operating fluid (35).

14. A device as claimed in one of the foregoing Claims, **characterized in that** said main supply conduit (36) also comprises a second portion (47) separated from said first portion (46) by a partition (45) inserted transversely and in fluidtight manner inside said main supply conduit (36); said second portion (47), defined between said partition (45) and a second end of said main supply conduit (36) opposite said first end (40), being maintained substantially in a vacuum; said partition (45) comprising a substantially rigid disk having a substantially hemispherical central portion (48) with the concavity facing said first portion (46) of said main supply conduit (36), and an annular peripheral edge (49) secured in fluidtight manner to an inner lateral wall of said main supply conduit (36); and said partition (45) also comprising cooling means (50).

15. A device as claimed in Claim 14, **characterized in that** said partition (45) comprises at least two sheets of a material transparent to high-energy particles; said cooling means comprising a second cooling circuit (50) at least partly inserted between said sheets and having inlet (51) and outlet (52) conduits on said peripheral edge (49) of said partition (45).

16. A nuclear reactor (1), in particular of the type employing a liquid metal as coolant and operating in subcritical conditions, **characterized by** comprising a device (33) for producing neutrons as claimed in any one of the foregoing Claims.

17. A method of producing neutrons by interaction of a beam (37) of high-energy particles with a first operating fluid (35) comprising a heavy-nucleus material, the method comprising the steps of:
- generating a beam (37) of high-energy particles;
- creating an interface (63) defined by a free surface (62) of said first operating fluid (35) separating said first operating fluid (35) and an end portion (46) of a main supply conduit (36);
- generating neutrons by directing said beam (37) of high-energy particles, by means of said main supply conduit (36) and along a predetermined direction, against a predetermined mass of the heavy-nucleus first operating fluid (35) located at one end (40) of said main supply conduit (36);
- extracting heat from the heavy-nucleus first operating fluid (35);
the method being **characterized in that**:
- during said neutron generating step, the heavy-nucleus first operating fluid (35) is circulated and conducted toward said free surface (62) in an opposite direction of said beam (37) and a spurting motion of said first operating fluid (35) is maintained just beneath said free surface (62), in said spurting motion said first operating fluid (35), conducted towards said free surface (62) in an opposite direction of said beam (37), being radially diverted before being moved away from said free surface (62).

18. A method as claimed in Claim 17, **characterized in that** during said interface creating step a pressurized gas (55) is inserted in at least a portion (46) of said main supply conduit (36) located at said end (40) of the main supply conduit (36), said free surface (62) separating the pressurized gas (55) in said first portion (46) and the first operating fluid (35) in said containing means (34) and being maintained by said pressurized gas (55) at a predetermined level with respect to said end (40) of said main supply conduit (36).

19. A method as claimed in Claim 17 or 18, **characterized in that** the heavy-nucleus first operating fluid (35) is kept circulating along a hydraulic path at least partially outside said main supply conduit (36).

20. A method as claimed in Claim 17 or 18, **characterized in that** the heavy-nucleus first operating fluid (35) is kept circulating along a hydraulic path defined entirely inside said main supply conduit (36) and in no way communicating hydraulically with the outside of the main supply conduit.

## Patentansprüche

1. Vorrichtung (33), insbesondere für einen subkritischen Kernreaktor, zum Erzeugen von Neutronen durch eine Wechselwirkung eines Strahls (37) von Hochenergiepartikeln mit einem ersten Betriebsfluid (35), das ein Material mit schwerem Kern beinhaltet, wobei die Vorrichtung folgendes aufweist:
eine Hauptzufuhrleitung (36), durch die der Strahl (37) von Hochenergiepartikeln entlang einer vorbestimmten Richtung zu dem ersten Betriebsfluid (35) geführt ist;
eine Aufnahmeeinrichtung (34) zum Aufnehmen des ersten Betriebsfluids (35), und die an einem ersten Ende (40) der Hauptzufuhrleitung (36) angeordnet ist;
eine Grenzfläche (63), die durch eine freie Fläche (62) des ersten Betriebsfluids (35) definiert ist, und die an dem ersten Ende (40) der Hauptzufuhrleitung (36) angeordnet ist und einen Abschnitt (46) der Hauptzufuhrleitung (36) und das erste Betriebsfluid (35) trennt;
eine Zirkuliereinrichtung (64) zum Zirkulieren des ersten Betriebsfluids (35) und zum in Bewegung Halten des ersten Betriebsfluids (35) an der freien Fläche (63) während der Wechselwirkung mit dem Strahl (37) von Hochenergiepartikeln;
eine Wärmetauscheinrichtung (21, 22) zum Gewinnen von Wärme von dem sich bewegenden ersten Betriebsfluid (35) ;
die Vorrichtung ist **dadurch gekennzeichnet, dass**
die Zirkuliereinrichtung (64) das erste Betriebsfluid (35) mit schwerem Kern in Richtung der freien Fläche (62) in einer entgegengesetzten Richtung des Strahls (37) leitet;
eine Förderstruktur (38) unterhalb der freien Fläche (62) und in einem gegebenen Abstand von der freien Fläche (62) angeordnet ist, und wobei die Geometrie der Förderstruktur (38) derartig ist, um eine schnelle Bewegung des ersten Betriebsfluids (35) gerade unterhalb der freien Fläche (62) zu erzeugen, bei der das erste Betriebsfluid (35), das in Richtung der freien Fläche (62) in einer entgegengesetzten Richtung des Strahls (37) durch die Zirkuliereinrichtung (64) geleitet ist, radial abgelenkt wird, bevor es von der freien Fläche (62) weg bewegt wird.

2. Vorrichtung gemäß Anspruch 1, **dadurch gekennzeichnet, dass** die Hauptzufuhrleitung (36) an dem ersten Ende (40) zumindest einen ersten Abschnitt (46) aufweist, der ein Gas (55) bei einem vorbestimmten Druck aufnimmt; wobei die freie Fläche (62) das mit Druck beaufschlagte Gas (55) in dem ersten Abschnitt (46) und das erste Betriebsfluid (35) in dem Aufnahmebehälter (34) trennt und durch das mit Druck beaufschlagte Gas (55) bei einer vorbestimmten Höhe mit Bezug auf das erste Ende (40) der Hauptzufuhrleitung (36) gehalten wird.

3. Vorrichtung gemäß Anspruch 2, **dadurch gekennzeichnet, dass** die Wärmetauscheinrichtung (22) zum Gewinnen von Wärme von dem sich bewegenden ersten Betriebsfluid (35) mit schwerem Kern eine erste Kühlkreislauf (22) aufweist, in der ein zweites Betriebsfluid (5) zum Kühlen zirkuliert.

4. Vorrichtung gemäß Anspruch 3, **dadurch gekennzeichnet, dass** das sich bewegende erste Betriebsfluid (35) mit schwerem Kern durch einen Teil des zweiten Betriebsfluids (5) zum Kühlen definiert ist, das durchgehend von dem Kühlkreislauf (22) angesaugt wird; wobei die Förderstruktur (38) zum Leiten des ersten Betriebsfluids (35) einen Weg, der zumindest teilweise mit dem Kühlkreislauf (22) des zweiten Betriebsfluids (5) übereinstimmt, für das erste Betriebsfluid (35) definiert.

5. Vorrichtung gemäß Anspruch 4, **dadurch gekennzeichnet, dass** sie ferner eine sekundäre Zufuhrleitung (53) zum Fördern des Gases (55) in den ersten Abschnitt (46) der Hauptzufuhrleitung (36) aufweist; wobei die Hauptzufuhrleitung (36) zumindest einen im Wesentlichen senkrechten, im Wesentlichen zylindrischen, geraden Endabschnitt (39) aufweist, an dem das erste Ende (40) der Hauptzufuhrleitung (36) ein offenes unteres Ende definiert, das in einem vorbestimmten Abstand von seinem eigenen unteren Ende (41) eine Anzahl von radialen Durchgangslöchern (42) aufweist; wobei der Druck des Gases (55) in dem ersten Abschnitt (46) der Hauptzufuhrleitung (36) derartig ist, um die freie Fläche (62) im Wesentlichen auf einer Höhe mit den radialen Löchern (42) zu halten.

6. Vorrichtung gemäß Anspruch 5, **dadurch gekennzeichnet, dass** die Förderstruktur (38) eine erste (56) und eine zweite Leitung (57) aufweist, die sowohl im Wesentlichen zylindrisch als auch koaxial mit dem Endabschnitt (39) der Hauptzufuhrleitung (36) sind und mit zugeordneten unteren Enden durch eine ringförmige untere Wand (58) verbunden sind; wobei die erste Leitung (56) einen kleineren Durchmesser als die Hauptzufuhrleitung (36) aufweist und unterhalb und in einem vorbestimmten Abstand von dem ersten Ende (40) der Hauptzufuhrleitung und unterhalb der freien Fläche (62) des ersten Betriebsfluids (35) angeordnet ist; wobei die zweite Leitung (57) einen größeren Durchmesser als die Hauptzufuhrleitung (36) aufweist und sich von der unteren Wand (58) senkrecht nach oben und über das erste Ende (40) der Hauptzufuhrleitung (36) erstreckt, um in einem vorbestimmten radialen Abstand zumindest einen Abschnitt der Hauptzufuhrleitung (36) zu umgeben, und um gemeinsam mit der Hauptzufuhrleitung eine ringförmige Leitung (59) zu definieren.

7. Vorrichtung gemäß Anspruch 6, **dadurch gekennzeichnet, dass** die erste Leitung (56) unterhalb der freien Fläche (62) des ersten Betriebsfluids (35), das an der Anzahl von radialen Durchgangslöchern (42) definiert ist, in einem Abstand von der freien Fläche (62) angeordnet ist, der ungefähr einem Viertel des Durchmessers der ersten Leitung (56) entspricht.

8. Vorrichtung gemäß Anspruch 3, **dadurch gekennzeichnet, dass** das erste Betriebsfluid (35) mit schwerem Kern vollständig innerhalb eines Endabschnitts des ersten Abschnitts (46) der Hauptzufuhrleitung (36) aufgenommen ist, die sich zwischen der freien Fläche (62) und dem ersten Ende (40) der Hauptzufuhrleitung (36) erstreckt; wobei die Förderstruktur (38) einen geschlossenen Kreislauf zum Zirkulieren des ersten Betriebsfluids definiert und auf keinen Fall mit dem Kühlkreislauf (22) des zweiten Betriebsfluids (5) zum Kühlen hydraulisch verbunden ist.

9. Vorrichtung gemäß Anspruch 8, **dadurch gekennzeichnet, dass** die Hauptzufuhrleitung (36) zumindest einen im Wesentlichen senkrechten, im Wesentlichen zylindrischen, geraden Endabschnitt (39) aufweist, an dem das erste Ende (40) ein unteres Ende definiert, das durch eine untere Wand (71) geschlossen ist; wobei die Hauptzufuhrleitung (36) ein exzentrisches Verlängerungsstück (72) aufweist, das ein geschlossenes unteres Ende (73), das einen kleineren Strömungsdurchgang als den der Hauptzufuhrleitung (36) aufweist, und das sich von der unteren Wand (71) senkrecht nach unten erstreckt, und eine Anzahl von hydraulischen Verbindungsleitungen (74) zum hydraulischen Verbinden des unteren Endes (40) der Hauptzufuhrleitung (36) mit dem geschlossenen unteren Ende (73) des Verlängerungsstücks (72) aufweist.

10. Vorrichtung gemäß Anspruch 9, **dadurch gekennzeichnet, dass** die Förderstruktur (38) von einem inneren Rand (76), der das Verlängerungsstück (72) mit der unteren Wand (71) verbindet, bis zu einem vorbestimmten Abstand unterhalb der freien Fläche (63) schräg nach oben vorsteht, um innerhalb des Endabschnitts (70) der Hauptzufuhrleitung (36) eine obere Erstreckung des Verlängerungsstücks (72) zu definieren, das einen Strömungsdurchgang aufweist, der sich nach oben erweitert.

11. Vorrichtung gemäß Anspruch 10, **dadurch gekennzeichnet, dass** das Verbindungsstück (72) und die hydraulischen Verbindungsleitungen (74) in das zweite Betriebsfluid (5) zum Kühlen getaucht sind, das in dem Kühlkreislauf (22) zirkuliert.

12. Vorrichtung gemäß Anspruch 11, **dadurch gekennzeichnet, dass** sie ferner eine sekundäre Zufuhrleitung (53) aufweist, die sich entlang des Endabschnitts (70) der Hauptzufuhrleitung (36) und entlang des exzentrischen Verlängerungsstücks (72) erstreckt, um eine eintretende Gasdosis in das erste Betriebsfluid (35) mit schwerem Kern zu dem geschlossenen unteren Ende (73) des Verlängerungsstücks (72) zu fördern.

13. Vorrichtung gemäß Anspruch 11 oder 12, **dadurch gekennzeichnet, dass** die Zirkuliereinrichtung eine angetriebene Zirkuliereinrichtung (85) aufweist, die zumindest teilweise in dem ersten Betriebsfluid (35) mit schwerem Kern getaucht ist.

14. Vorrichtung gemäß irgendeinem der vorhergehenden Ansprüche, **dadurch gekennzeichnet, dass** die Hauptzufuhrleitung (36) ferner einen zweiten Abschnitt (47) aufweist, der von dem ersten Abschnitt (46) durch eine Trennwand (45) getrennt ist, die querverlaufend und in einer fluiddichten Art und Weise innerhalb der Hauptzufuhrleitung (36) eingesetzt ist; wobei der zweite Abschnitt (47), der zwischen der Trennwand (45) und einem zweiten Ende der Hauptzufuhrleitung (36) gegenüber dem ersten Ende (40) definiert ist, im Wesentlichen in einem Vakuum gehalten wird; wobei die Trennwand (45) eine im Wesentlichen starre Scheibe, die einen im Wesentlichen halbkugelförmigen mittigen Abschnitt (48) aufweist, wobei die Wölbung zu dem ersten Abschnitt (46) der Hauptzufuhrleitung (36) zugewandt ist, und einen ringförmigen peripheren Rand (49) aufweist, der in fluiddichter Art und Weise an einer inneren seitlichen Wand der Hauptzufuhrleitung (36) gesichert ist; und wobei die Trennwand (45) ferner eine Kühleinrichtung (50) aufweist.

15. Vorrichtung gemäß Anspruch 14, **dadurch gekennzeichnet, dass** die Trennwand (45) zumindest zwei Bleche eines Materials aufweist, das transparent gegenüber Hochenergiepartikeln ist; wobei die Kühleinrichtung einen zweiten Kühlkreislauf (50) aufweist, der zumindest teilweise zwischen den Blechen eingesetzt ist und eine Einlass- (51) und eine Auslassleitung (52) an dem peripheren Rand (49) der Trennwand (45) aufweist.

16. Kernreaktor (1), insbesondere der Bauart, die ein Flüssigmetall als Kühlmittel anwendet und bei subkritischen Zuständen betrieben wird, **dadurch gekennzeichnet, dass** er eine gemäß den vorhergehenden Ansprüchen beanspruchte Vorrichtung (33) zum Erzeugen von Neutronen aufweist.

17. Verfahren zum Erzeugen von Neutronen durch eine Wechselwirkung eines Strahls (37) von Hochenergiepartikeln mit einem ersten Betriebsfluid (35), das ein Material mit schwerem Kern beinhaltet, wobei das Verfahren die folgenden Schritte aufweist:
Erzeugen eines Strahls (37) von Hochenergiepartikeln;
Erzeugen einer Grenzfläche (63), die durch eine freie Fläche (62) des ersten Betriebsfluids (35) definiert ist, und die das erste Betriebsfluid (35) und einen Endabschnitt (36) einer Hauptzufuhrleitung (36) trennt;
Erzeugen von Neutronen durch Führen des Strahls (37) von Hochenergiepartikeln mittels der Hauptzufuhrleitung (36) und entlang einer vorbestimmten Richtung gegen eine vorbestimmte Masse des ersten Betriebsfluids (35) mit schwerem Kern, das an einem Ende (40) der Hauptzufuhrleitung (36) angeordnet ist;
Gewinnen von Wärme von dem ersten Betriebsfluid (35) mit schwerem Kern;
wobei das Verfahren **dadurch gekennzeichnet ist, dass**
- während des Neutronenerzeugungsschritts das erste Betriebsfluid (35) mit schwerem Kern zirkuliert und in Richtung der freien Fläche (62) in einer entgegengesetzten Richtung des Strahls (37) geleitet wird, und eine schnelle Bewegung des ersten Betriebsfluids (35) gerade unterhalb der freien Fläche (62) erhalten wird, wobei bei der schnellen Bewegung das erste Betriebsfluid (35), das in Richtung der freien Fläche (62) in einer entgegengesetzter Richtung des Strahls (37) geführt wird, radial abgelenkt wird, bevor es von der freien Fläche (62) weg bewegt wird.

18. Verfahren gemäß Anspruch 17, **dadurch gekennzeichnet, dass** während des Grenzflächenerzeugungsschritts ein mit Druck beaufschlagtes Gas (55) in zumindest einen Abschnitt (46) der Hauptzufuhrleitung (36) eingeführt wird, der an dem Ende (40) der Hauptzufuhrleitung (36) angeordnet ist, wobei die freie Fläche (62) das mit Druck beaufschlagte Gas (55) in dem ersten Abschnitt (46) und das erste Betriebsfluid (35) in der Aufnahmeeinrichtung (34) trennt und durch das mit Druck beaufschlagte Gas (55) in einer bestimmten Höhe mit Bezug auf das Ende (40) der Hauptzufuhrleitung (36) gehalten wird.

19. Verfahren gemäß Anspruch 17 oder 18, **dadurch gekennzeichnet, dass** das erste Betriebsfluid (35) mit schwerem Kern entlang eines hydraulischen Wegs zirkulierend gehalten wird, der zumindest teilweise außerhalb der Hauptzufuhrleitung (36) angeordnet ist.

20. Verfahren gemäß Anspruch 17 oder 18, **dadurch gekennzeichnet, dass** das erste Betriebsfluid (35) mit schwerem Kern entlang eines hydraulischen Wegs zirkulierend gehalten wird, der vollständig innerhalb der Hauptzufuhrleitung (36) definiert ist und auf keinen Fall mit der Außenseite der Hauptzufuhrleitung hydraulisch verbunden ist.

## Revendications

1. Un dispositif (33), en particulier pour un réacteur nucléaire sous-critique, pour produire des neutrons par l'interaction d'un faisceau (37) de particules d'énergie élevée avec un premier fluide de fonctionnement (35) comprenant un matériau à noyaux lourds, le dispositif comprenant :
- un conduit d'alimentation principal (36) de sorte que ledit faisceau (37) de particules d'énergie élevée soit dirigé sur ledit premier fluide de fonctionnement (35) le long d'une direction prédéterminée ;
- des moyens de contenant (34) pour contenir ledit premier fluide de fonctionnement (35) et situés à une première extrémité (40) dudit conduit d'alimentation principal (36) ;
- une interface (63) définie par une surface libre (62) dudit premier fluide de fonctionnement (35) situé à ladite première extrémité (40) du conduit d'alimentation principal (36) et séparant une portion (46) dudit conduit d'alimentation principal (36) et dudit premier fluide de fonctionnement (35) ;
- des moyens de circulation (64) pour faire circuler ledit premier fluide de fonctionnement (35) et pour maintenir ledit premier fluide de fonctionnement (35) en mouvement sur ladite surface libre (62) au cours de ladite interaction avec ledit faisceau (37) de particules d'énergie élevée ;
- des moyens d'échange thermique (21, 22) pour extraire de la chaleur dudit premier fluide de fonctionnement en mouvement (35) ;
le dispositif étant **caractérisé en ce que** :
- lesdits moyens de circulation (64) dirigent ledit premier fluide de fonctionnement à noyaux lourds (35) vers ladite surface libre (62) dans une direction opposée audit faisceau (37) ;
- une structure d'alimentation (38) est située en dessous de ladite surface libre (62) et à une distance donnée de ladite surface libre (62), et la géométrie de ladite structure libre (38) est telle qu'elle produise un mouvement de jaillissement dudit premier fluide de fonctionnement (35) juste en dessous de ladite surface libre (62), dans lequel ledit premier fluide de fonctionnement (35), dirigé vers ladite surface libre (62) dans une direction opposée audit faisceau (37) par lesdits moyens de circulation (64), étant dévié radialement avant d'être éloigné de ladite surface libre (62).

2. Un dispositif selon la revendication 1, **caractérisé en ce que** ledit conduit d'alimentation principal (36) comprend, à ladite première extrémité (40), au moins une première portion (46) contenant un gaz (55) à une pression prédéterminée ; ladite surface libre (62) séparant le gaz sous pression (55) dans ladite première portion (46) et le premier fluide de fonctionnement (35) dans lesdits moyens de contenant (34), et étant maintenu par le gaz sous pression (55) à un niveau prédéterminé par rapport à ladite première extrémité (40) du conduit d'alimentation principal (36).

3. Un dispositif selon la revendication 2, **caractérisé en ce que** lesdits moyens d'échange thermique (22) pour extraire la chaleur du premier fluide de fonctionnement à noyaux lourds en mouvement (35) comprennent un premier circuit de refroidissement (22) dans lequel circule un second fluide de fonctionnement de refroidissement (5).

4. Un dispositif selon la revendication 3, **caractérisé en ce que** le premier fluide de fonctionnement à noyaux lourds en mouvement (35) est défini par une portion du second fluide de fonctionnement de refroidissement (5) aspiré en continu dudit circuit de refroidissement (22), ladite structure d'alimentation (38) pour diriger ledit premier fluide de fonctionnement (35) définissant, pour ledit premier fluide de fonctionnement (35), un parcours au moins partiellement en commun avec ledit circuit de refroidissement (22) dudit second fluide de fonctionnement (5).

5. Un dispositif selon la revendication 4, **caractérisé en ce qu'**il comprend également un conduit d'alimentation secondaire (53) pour introduire ledit gaz (55) dans ladite première portion (46) dudit conduit d'alimentation principal (36) ; ledit conduit d'alimentation principal (36) ayant au moins une portion d'extrémité (39) droite, sensiblement cylindrique, sensiblement verticale dont ladite première extrémité (40) du conduit d'alimentation principal (36) définit une extrémité inférieure ouverte (41) ayant, à une distance prédéterminée de sa propre extrémité inférieure, un certain nombre de trous traversant radiaux (42) ; la pression dudit gaz (55) dans ladite première portion (46) dudit conduit d'alimentation principal (36) étant telle que ladite surface libre (62) soit maintenue sensiblement au niveau desdits trous radiaux (42).

6. Un dispositif selon la revendication 5, **caractérisé en ce que** ladite structure d'alimentation (38) comprend un premier (56) et un second (57) conduits, tous deux sensiblement cylindriques et coaxiaux à ladite portion d'extrémité (39) dudit conduit d'alimentation principal (36), et connectés aux extrémités inférieures correspondantes par une paroi inférieure annulaire (58) ; ledit premier conduit (56) présentant un diamètre inférieur à celui du conduit d'alimentation principal (36) et étant situés en dessous et à une distance prédéterminée de ladite première extrémité (40) du conduit d'alimentation principal et en dessous de ladite surface libre (62) dudit premier fluide de fonctionnement (35) ; ledit second conduit (57) présentant un diamètre supérieur à celui dudit conduit d'alimentation principal (36), et s'étendant verticalement vers le haut à partir de ladite paroi inférieure (58) et au-delà de ladite première extrémité (40) dudit conduit d'alimentation principal (36), de manière à entourer, à une distance radiale prédéterminée, au moins une portion dudit conduit d'alimentation principal (36) et à définir, conjointement avec le conduit d'alimentation principal, un conduit annulaire (59).

7. Un dispositif selon la revendication 6, **caractérisé en ce que** ledit premier conduit (56) est situé en dessous de ladite surface libre (62) dudit premier fluide de fonctionnement (35) défini au niveau dudit nombre de trous traversant radiaux (42), à une distance de ladite surface libre (62) égale à environ un quart du diamètre dudit premier conduit (56).

8. Un dispositif selon la revendication 3, **caractérisé en ce que** le premier fluide de fonctionnement à noyaux lourds (35) est contenu complètement à l'intérieur d'une portion d'extrémité de ladite première portion (46) dudit conduit d'alimentation principal (36) s'étendant entre ladite surface libre (62) et ladite première extrémité (40) du conduit d'alimentation principal (36) ; ladite structure d'alimentation (38) définissant un circuit fermé pour faire circuler le premier fluide de fonctionnement et ne communiquant pas de manière hydraulique avec ledit circuit de refroidissement (22) du second fluide de fonctionnement de refroidissement (5).

9. Un dispositif selon la revendication 8, **caractérisé en ce que** ledit conduit d'alimentation principal (36) présente au moins une portion d'extrémité (39) droite sensiblement verticale, sensiblement cylindrique dont ladite première extrémité (40) définit une extrémité inférieure par une paroi inférieure (71) ; ledit conduit d'alimentation principal (36) comprenant un appendice excentrique (72) ayant une extrémité inférieure fermée (73), ayant un passage d'écoulement plus petit que celui dudit conduit d'alimentation principal (36), et s'étendant verticalement vers le bas à partir de ladite paroi inférieure (71), et un certain nombre de conduits de connexion hydrauliques (74) pour connecter de manière hydraulique ladite extrémité inférieure (40) dudit conduit d'alimentation principal (36) à ladite extrémité inférieure fermée (73) dudit appendice (72).

10. Un dispositif selon la revendication 9, **caractérisé en ce que** ladite structure d'alimentation (38) se projette obliquement vers le haut, d'un bord intérieur (76) reliant ledit appendice (72) à ladite paroi inférieure (71), jusqu'à une distance prédéterminée sous ladite surface libre (62), de manière à définir, à l'intérieur de ladite portion d'extrémité (70) du conduit d'alimentation principal (36), une extension supérieure dudit appendice (72) ayant un passage d'écoulement s'agrandissant vers le haut.

11. Un dispositif selon la revendication 10, **caractérisé en ce que** ledit appendice (72) et lesdits conduits de liaison hydraulique (74) sont immergés dans le second fluide de fonctionnement de refroidissement (5) circulant dans ledit circuit de refroidissement (22).

12. Un dispositif selon la revendication 11, **caractérisé en ce qu'**il comprend en outre un conduit d'alimentation secondaire (53) s'étendant le long de ladite portion d'extrémité (70) dudit conduit d'alimentation principal (36) et le long dudit appendice excentrique (72) pour introduire un gaz d'entraînement dans le premier fluide de fonctionnement à noyaux lourds (35) proche de ladite extrémité inférieure fermée (73) dudit appendice (72).

13. Un dispositif selon la revendication 11 ou 12, **caractérisé en ce que** lesdits moyens de circulation comprennent des moyens de circulation forcée (85) au moins partiellement immergés dans le premier fluide de fonctionnement à noyaux lourds (35).

14. Un dispositif selon l'une quelconque des revendications précédentes, **caractérisé en ce que** ledit conduit d'alimentation principal (36) comprend également une seconde portion (47) séparée de ladite première portion (46) par une séparation (45) insérée transversalement et de manière étanche à l'intérieur dudit conduit d'alimentation principal (36) ; ladite seconde portion (47), définie entre ladite séparation (45) et une seconde extrémité dudit conduit d'alimentation principal (36) opposée à ladite première extrémité (40), étant sensiblement maintenue en dépression ; ladite séparation (45) comprenant un disque sensiblement rigide ayant une portion centrale sensiblement hémisphérique (48) dont la concavité est disposée face à ladite première portion (46) dudit conduit d'alimentation principal (36), et un bord périphérique annulaire (49) fixé de manière étanche à une paroi latérale intérieure dudit conduit d'alimentation principal (36) ; et **en ce que** ladite séparation (45) comprend également des moyens de refroidissement (50).

15. Un dispositif selon la revendication 14, **caractérisé en ce que** ladite séparation (45) comprend au moins deux feuilles d'un matériau transparent aux particules d'énergie élevée ; lesdits moyens de refroidissement comprenant un second circuit de refroidissement (50) au moins partiellement inséré entre lesdites feuilles et ayant un conduit d'admission (51) et un conduit d'évacuation (52) sur ledit bord périphérique (49) de ladite séparation (45).

16. Un réacteur nucléaire (1), en particulier du type utilisant un métal liquide comme agent de refroidissement et fonctionnant dans des conditions sous-critiques, **caractérisé en ce qu'**il comprend un dispositif (33) pour produire des neutrons selon l'une quelconque des revendications précédentes.

17. Un procédé de production de neutrons par l'interaction d'un faisceau (37) de particules d'énergie élevée avec un premier fluide de fonctionnement (35) comprenant un matériau à noyaux lourds, le procédé comprenant les étapes de :
- production d'un faisceau (37) de particules d'énergie élevée ;
- création d'une interface (63) définie par une surface libre (62) dudit premier fluide de fonctionnement (35) séparant ledit premier fluide de fonctionnement (35) et une portion d'extrémité (46) d'un conduit d'alimentation principal (36) ;
- production de neutrons en dirigeant ledit faisceau (37) de particules d'énergie élevée, au moyen dudit conduit d'alimentation principal (36) et le long d'une direction prédéterminée, contre une masse prédéterminée du premier fluide de fonctionnement (35) à noyaux lourds située à une extrémité (40) dudit conduit d'alimentation principal (36) ;
- extraction de la chaleur du premier fluide de fonctionnement (35) à noyaux lourds ;
le procédé étant **caractérisé en ce que** :
- au cours de ladite étape de production de neutrons, le premier fluide de fonctionnement à noyaux lourds (35) est mis en circulation et dirigé vers ladite surface libre (62) dans une direction opposée dudit faisceau (37) et un mouvement de jaillissement dudit premier fluide de fonctionnement (35) est maintenu juste en dessous de ladite surface libre (62), dans ledit mouvement de jaillissement dudit premier fluide de fonctionnement (35), dirigé vers ladite surface libre (62) dans une direction opposée dudit faisceau (37), et radialement dévié avant d'être éloigné de ladite surface libre (62).

18. Un procédé selon la revendication 17, **caractérisé en ce qu'**au cours de ladite l'étape de création d'une interface, un gaz sous pression (55) est inséré dans au moins une portion (46) dudit conduit d'alimentation principal (36) situé à ladite extrémité (40) du conduit d'alimentation principal (36), ladite surface libre (62) séparant le gaz sous pression (55) dans ladite première portion (46) et le premier fluide de fonctionnement (35) dans lesdits moyens de contenant (34) et étant maintenu par ledit gaz sous pression (55) à un niveau prédéterminé par rapport à ladite extrémité (40) dudit conduit d'alimentation principal (36).

19. Un procédé selon la revendication 17 ou 18, **caractérisé en ce que** la circulation du premier fluide de fonctionnement (35) à noyaux lourds est maintenue le long d'un parcours hydraulique au moins partiellement à l'extérieur dudit conduit d'alimentation principal (36).

20. Un procédé selon la revendication 17 ou 18, **caractérisé en ce que** la circulation du premier fluide de fonctionnement (35) à noyaux lourds est maintenue le long d'un parcours hydraulique défini complètement à l'intérieur dudit conduit d'alimentation principal (36) et ne communiquant pas du tout de manière hydraulique avec l'extérieur du conduit d'alimentation principal.
